# EUROPÄISCHE PATENTSCHRIFT

(11) **EP 2 489 457 B1**
(45) Veröffentlichungstag und Bekanntmachung des Hinweises auf die Patenterteilung: **23.01.2013**
(21) Anmeldenummer: 11154921.8
(22) Anmeldetag: 18.02.2011
(51) Int. Cl.: B23K 7/00, B23K 7/10, B22D 11/126, F24F 11/02

(54) **Strangbrennscheidmaschine mit einer Anklemmeinrichtung sowie ein Verfahren zur Steuerung einer solchen Anklemmeinrichtung**
Flame cutting machine with a clamp device and a method of controlling such clamp device
Machine de coupage à la flamme avec un dispositif de serrage et procédé de commande d'un tel dispositif de serrage

(43) Veröffentlichungstag der Anmeldung: 22.08.2012
(73) Patentinhaber: GeGa GmbH, 65719 Hofheim-Wallau (DE)
(72) Erfinder: Deica, Alexander, 65510 Hünstetten (DE)
(74) Vertreter: Aue, Hans-Peter

(56) Entgegenhaltungen:
- EP-A1- 0 639 416
- FR-A1- 2 589 225
- JP-A- 2005 131 675
- JP-U- 52 109 685

## Beschreibung

Die Erfindung bezieht sich auf eine Strangbrennscheidmaschine mit einem Schneidbrenner und einer Anklemmeinrichtung mit schwenkbarer Halterung zum Anklemmen an Brammen und einer Kühlwasser durchströmten Hitzeschutzplatte (siehe Anspruch 1) und auf ein Verfahren zur Steuerung dieser Anklemmeinrichtung (siehe Anspruch 2; siehe auch EP 0639 416 A1).

Endlos vergossene Stränge aus Stahl in Stranggießanlagen müssen zur Weiterverarbeitung in transportable und den Endprodukten entsprechende Längen unterteilt werden. Diese überwiegend heißen Blöcke oder Brammen werden üblicherweise durch Sauerstoffschneidbrenner an einer Strangbrennschneidmaschine abgetrennt. Bei einer solchen Strangbrennschneidmaschine verwandelt ein Schneidsauerstoffstrahl den auf Zündtemperatur gebrachten Stahl in eine abfließende Oxydschlacke und erzeugt so eine Fuge, die bei Bewegung in einen Schnitt auswächst.

Bei allen bekannten Ausführungen von Strangbrennschneidmaschinen handelt es sich um robuste, überwiegend portalartige, auf zu beiden Seiten des Stranges angeordneten Schienen verfahrende Maschinengehäuse aus zusammengeschweißten schweren Profilen und Stahlplatten. Eine ebenso erzeugte Brennerwagenlaufbahn an der Strangbrennscheidmaschine trägt mindestens einen Brennerwagen mit Schneidbrennern.

Bei notwendigen Reparatur- und Wartungsarbeiten an der Strangbrennschneidanlage kann es zum Stillstand der Anlage kommen, was mit enormen Kosten- und Zeitaufwand verbunden ist.

Es sind Brennschneidmaschinen bekannt, beispielsweise aus der DE 85 01 163 U1, die mit dem Strang in Gleichlauf gebracht werden, nachdem unter dem Brenner eine gewünschte Stranglänge durchgelaufen ist. Dabei wird bei einer zangenartigen Anklemmeinrichtung ein Reibbacken oder Stempel aufgedrückt, während beim Aufklemmen ein Teil des Maschineneigengewichts zur Erzeugung der erwünschten Mitlaufreibung benutzt wird, während gleichzeitig das eine Gegenkraft durch Reibung auf der Laufbahn erzeugende Gewicht der Brennschneidmaschine entsprechend verringert wird.

Aus der DE 85 01 244 U1 ist eine Brennschneidmaschine für Stranggießanlagen zum Trennen kleinerer Querschnitte bekannt, bei der auf einer Maschinenplatte Lageraugen angeschweißt sind, in denen drei oder mehr Lauf- bzw. Führungsräder, zwei Klemmhebel und ein oder zwei Schneidbrenner drehbar gelagert sind. Dabei besteht die Klemmeinrichtung aus Aufklemm- oder Abklemmhebeln, die ein lecksicherer Balgzylinder betätigt. Die Rückführung wird der Klemmhebel wird dadurch erreicht, dass an der Rückseite ein Seil befestigt ist, das - über eine Umlenkrolle geführt - an seinem Ende ein Rückholgewicht trägt.

Durch ein Gegen- oder Rückholgewicht wird das Gesamtgewicht der Strangbrennscheidmaschine natürlich erheblich erhöht.

Aus der EP 0 639 416 A1 ist eine Strangbrennschneidmaschine bekannt, bei der unter der Grundplatte eine Kühlwasser durchströmte Wärmeschutzplatte angeordnet ist. Darüber hinaus befindet sich an der Grundplatte ein Lagerschild zur Aufnahme für eine aus zwei Anklemmhebeln bestehende Anklemmung.

Weiterhin offenbart die JP 2005/131275 A eine Anklemmeinrichtung ein Paar mit Druckluft betriebenen gleichwirkenden Klemmhebeln, die an einer über dem Werkstückdurchgang befindlichen Brücke gelagert sind.

Schließlich zeigt die FR 2 589 225 A1 einen mit einem Druckluftzylinder gesteuerten Anklemmhebel für einen Ventilverschluss.

Beim Bedien-, Reparatur- und Wartungspersonal, insbesondere bei einer Betriebsstörung, kann es wegen der unmittelbaren Arbeitsnähe am heißen Strang und der damit verbundenen Hitzeabstrahlung zu mehr oder weniger starken Verletzungen führen. Das Personal muss demnach bei einer Betriebsstörung, in der das Gegen- oder Rückholgewicht die Klemmeinrichtung von der Bramme nicht maschinell löst, unter der enormen Hitze die Klemmeinrichtung manuell lösen. Dabei ist das Arbeiten der Bedienpersonen in der Nähe der heißen Gießstränge sehr schwer und auf die Dauer nicht zumutbar.

Es ist Aufgabe der Erfindung, eine Strangbrennscheidmaschine mit einer Anklemmeinrichtung sowie ein Verfahren zur Steuerung für eine solche Anklemmeinrichtung der eingangs genannten Art zu schaffen, mit der die Strangbrennschneidmaschine von ihrer Anklemmung mit der Bramme gefahrlos, d.h. bei einem Ausfall der Steuerung durch Stromausfall, bei einem Ausfalls eines steuerungsrelevanten Bauteils oder einer Leckage in der Medienleitung bzw. eines Ausfalls des

Betätigungsmediums Druckluft, gelöst werden kann, ohne die Strangbrennschneidmaschine betreten zu müssen.

Erfindungsgemäß wird die Aufgabe dadurch gelöst, dass die Anklemmeinrichtung im hinteren Bereich der Strangbrennscheidmaschine zwei schwenkbare Halterungen aufweist, die mittels wenigstens einem an der Strangbrennscheidmaschine angeordneten Druckluftzylinder um einen senkrecht zur Längserstreckung einer Bramme orientierten Drehpunkt D an der Strangbrennscheidmaschine betätigbar sind, wobei an den Halterungen jeweils ein Anklemmhalter mit einer Anklemmplatte an deren vorderen freien Ende zur Anklemmung an die Bramme starr angebracht und weiterhin an der Halterung die mit Kühlwasser durchströmte Hitzeschutzplatte befestigt ist, und dass sich Armaturen zum Freigeben der Medienwege und die Mediensteuerung außerhalb der Strangbrennschneidmaschine befinden, wobei die Anordnung der schwenkbaren Halterungen zusammen mit den Anklemmhaltern und den Anklemmplatten und der mit Kühlwasser durchströmten Hitzeschutzplatte so angeordnet sind, dass das Rückstellmoment M1 zum Anheben des Anklemmhalters mit der Anklemmplatte in eine obere Stellung und damit das Lösen von der Bramme nicht durch zusätzliche Gegen- oder Rückholgewichte, sondern durch die Anordnung der schwenkbaren Halterungen zusammen mit den Anklemmhaltern und der mit Kühlwasser durchströmten Hitzeschutzplatte für die Brennschneidmaschinenkühlung, bezogen auf den Drehpunkt D größer ist, als das Moment M1 aus dem Gewicht F2 des Anklemmhalters 3 mit der Anklemmplatte multipliziert mit dem Hebelarm L2 und den auftretenden Reibungswiderständen.

Verfahrensgemäß wird die Aufgabe auch dadurch gelöst, dass nach dem Freigeben der Medienwege durch Armaturen das Rückstellmoment M1 zum Anheben des Anklemmhalters mit der Anklemmplatte in die obere Stellung und damit das Lösen von der Bramme nicht durch zusätzliche Gegen- oder Rückholgewichte, sondern durch die Anordnung der schwenkbaren Halterungen zusammen mit den Anklemmhaltern und der mit Kühlwasser durchströmten Hitzeschutzplatte für die Brennschneidmaschinenkühlung, bezogen auf den Drehpunkt D größer ist, als das Moment aus dem Gewicht F2 des Anklemmhalters mit der Anklemmplatte multipliziert mit dem Hebelarm L2 und den auftretenden Reibungswiderständen.

Bei einer vorteilhaften Ausgestaltung des Verfahrens erfolgt das Freigeben der Medienwege durch die Armaturen manuell und/oder elektrisch, beispielsweise ferngesteuert.

Mit dem Signal durch eine Steuerung für die Anklemmung auf die Bramme, werden die Druckluftzylinder mit Druckluft über die normalen Medienversorgungsleitungen versorgt. Die Kolbenstange des Druckluftzylinders fährt aus und die Anklemmplatte bewegt sich um den Drehpunkt D an der Strangbrennscheidmaschine nach unten und verbindet die Strangbrennschneidmaschine mit der Bramme. Die Strangbrennschneidmaschine und die Bramme laufen nun synchron und der Brennschneidprozess kann beginnen.

Nach der Beendigung des Brennschneidprozesses wird die Anklemmung von der Bramme durch das Anheben der Anklemmplatten gelöst. Hierfür wird der Druckluftzylinder mit Druckluft zum Anheben der Anklemmplatten versorgt und die Kolbenstange des Druckluftzylinders fährt zurück und hebt die Anklemmplatten in die obere Position.

Im Störfall an der Strangbrennschneidmaschine, beispielsweise bei einem Stromausfall, ist es, um Folgeschäden zu vermeiden, erforderlich, dass die Strangbrennschneidmaschine schnell von der Bramme gelöst wird. Hierzu sind die Bauteile Hitzeschutzplatte, die zwei Halter mit dem Drehpunkt D an der Strangbrennscheidmaschine und die Anklemmhalter mit der Anklemmplatte konstruktiv so angeordnet und ausgelegt, dass sie ohne zusätzliche Gegengewichte ein Rückstellmoment M1 erzeugen, das nach dem Entlüften der Druckluftzylinder die Anklemmplatten um den Drehpunkt D an der Strangbrennscheidmaschine nach oben bewegt und die Strangbrennschneidmaschine von der Bramme löst.

Die Entlüftung der Druckluftzylinder erfolgt im Störfall über von Hand betätigte Armaturen, die außerhalb der Strangbrennschneidmaschine angebracht sind. Somit ist ein gefahrloses Lösen der Anklemmverbindung gewährleistet.

Durch ein fehlendes Gegengewicht zur Anklemmungsrückstellung ist das Gesamtgewicht der Strangbrennschneidmaschine geringer.

Während des normalen Brennschneidvorganges werden die handbetätigten Armaturen bezüglich ihrer korrekten Einstellung für die Betriebssicherheit überwacht.

Die Armaturen zum Freigeben der Medienwege befinden sich außerhalb der Strangbrennschneidmaschine, so dass das Lösen der Verbindung zwischen Strangbrennschneidmaschine und Bramme außerhalb des Gefahrenbereiches erfolgt.

Der der Erfindung zugrunde liegende Gedanke wird in der nachfolgenden Beschreibung anhand eines Ausführungsbeispieles, das in den Zeichnungen dargestellt ist, näher beschrieben. Es zeigen:
- Fig. 1: eine Seitenansicht der Strangbrennschneidmaschine mit der Anklemmeinrichtung in der unteren an die Bramme angeklemmten Stellung und
- Fig. 2: eine Seitenansicht der Strangbrennschneidmaschine gemäß Fig. 1 mit der Anklemmeinrichtung in der oberen, von der Bramme gelösten Stellung.

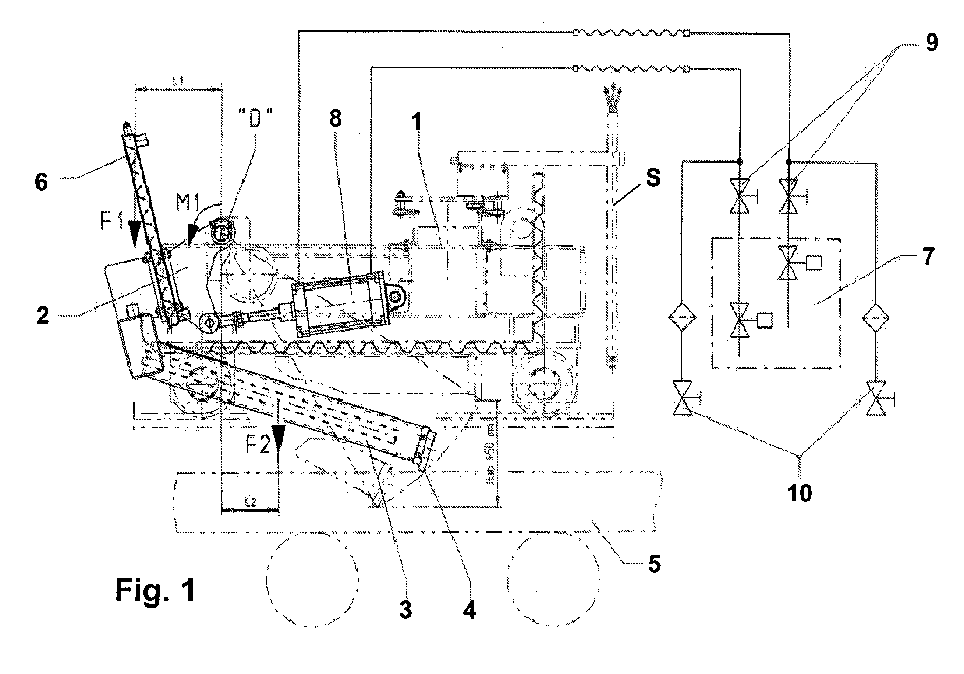

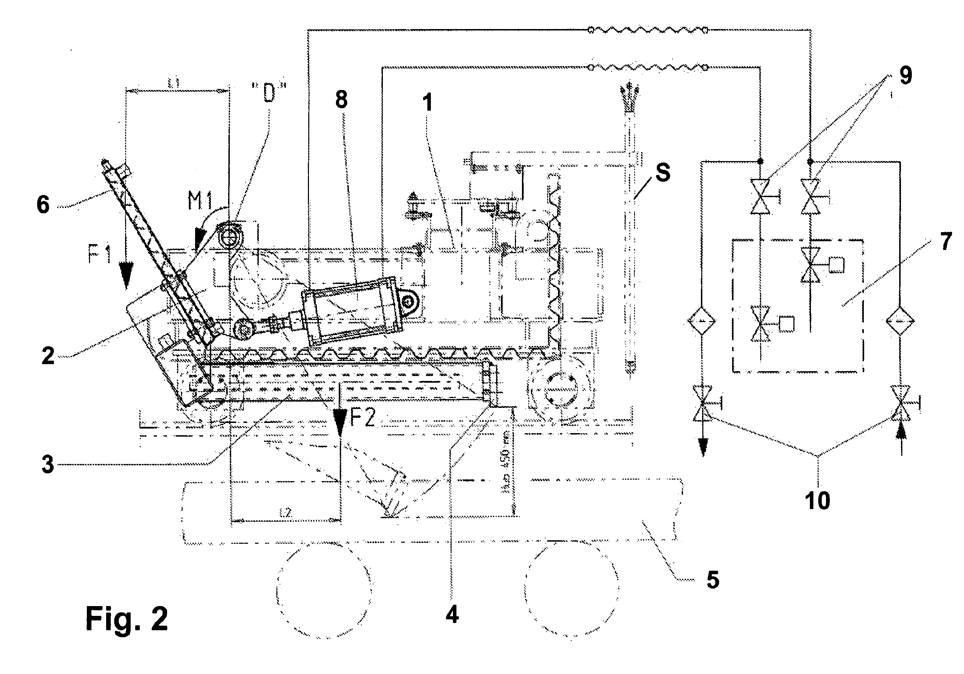

Die Fig. 1 und 2 zeigen die Strangbrennschneidmaschine 1 mit einem Schneidbrenner S in strichpunktierter Darstellung. Die Baugruppe der Anklemmeinrichtung im hinteren Bereich der Strangbrennscheidmaschine 1 umfasst zwei schwenkbare Halterungen 2, die mittels wenigstens einem an der Strangbrennscheidmaschine 1 angeordneten Druckluftzylinder um einen Drehpunkt D an der Strangbrennscheidmaschine 1 betätigt werden.

An jeder Halterung 2 ist ein Anklemmhalter 3 mit jeweils einer Anklemmplatte 4 an deren vorderen freien Ende starr angebracht, die zur Anklemmung an die zu schneidende Bramme 5 dient. Des Weiteren ist an den Halterungen 2 eine mit Kühlwasser durchströmte Hitzeschutzplatte 6 befestigt.

Außerhalb der Strangbrennscheidmaschine 1 befinden sich die Armaturen zum Freigeben der Medienwege und die Mediensteuerung 7 für mindestens einen an der Strangbrennscheidmaschine 1 befestigten und mit den Halterungen 2 verbundenen Druckluftzylinder 8.

Gemäß Fig. 1 werden die Anklemmplatte 4 der Anklemmhalter 3 durch den ausgefahrenen Druckluftzylinder 8 über die Halterungen 2 und Drehung der Anklemmeinrichtung um den Drehpunkt D auf die Oberfläche der Bramme 3 abgesenkt und angeklemmt. Dabei wird die Hitzeschutzplatte 6 angehoben und wirkt als Gewicht F1 über den Hebelarm L1. Die manuell zu betätigenden Absperrventile 9 sind geöffnet, die handbetätigten Absperrventile 10 für die Belüftung der Druckluftzylinder 8 sind geschlossen, so dass die Druckluftversorgung der Druckluftzylinder 8 über die automatische Mediensteuerung 7 erfolgt.

In Fig. 2 ist die Strangbrennschneidmaschine 1 gemäß Fig. 1 mit der Baugruppe Anklemmeinrichtung oben beschriebenen Bauteilen bei einem Störfall dargestellt. Die Anklemmplatte 4 wurde durch das Drehmoment M1 und durch die Belüftung der Druckluftzylinder 8 in die obere Stellung bewegt, nachdem die handbetätigten Absperrventile 9 geschlossen und die handbetätigten Absperrventile 10 für die Belüftung der Druckluftzylinder 8 geöffnet wurden. Die Wege der automatischen Mediensteuerung 7 sind nun nicht mehr wirksam.

Die erfindungsgemäße Lösung bezieht sich somit auf eine Anklemmeinrichtung für eine Strangbrennschneidmaschine 1, bei der die Verbindung zwischen Strangbrennschneidmaschine 1 und Bramme 3 im Störfall, z.B. bei Stromausfall, Steuerungsausfall etc.) durch außerhalb der Strangbrennschneidmaschine 1 befindliche handbetätigte Absperrventile 9,10 gelöst werden kann. Das hierfür erforderliche Rückstellmoment M1 wird nicht durch zusätzliche Gegengewichte, sondern durch die ohnehin vorhandenen Bauteile der Anklemmeinrichtung, insbesondere der mit Kühlwasser durchströmten hinteren Hitzeschutzplatte 6 aufgebracht. Die handbetätigten Absperrventile 9,10 werden im Normalbetrieb in ihrer korrekten Stellung überwacht.

### Liste der Bezugszeichen

- 1: Strangbrennscheidmaschine
- 2: Halterung
- 3: Anklemmhalter
- 4: Anklemmplatte
- 5: Bramme
- 6: Hitzeschutzplatte
- 7: Mediensteuerung
- 8: Druckluftzylinder
- 9: Absperrventile
- 10: Absperrventile
- S: Schneidbrenner
- D: Drehpunkt
- M1: Rückstellmoment
- F1: Gewicht
- F2: Gewicht
- L1: Hebelarm
- L2: Hebelarm

## Patentansprüche

1. Strangbrennscheidmaschine (1) mit einem Schneidbrenner (S) und einer Anklemmeinrichtung zum Anklemmen an Brammen (5) mit schwenkbarer Halterung (2) zum Anklemmen an Brammen (5) und einer Kühlwasser durchströmten Hitzeschutzplatte (6), **dadurch gekennzeichnet, dass** die Anklemmeinrichtung im hinteren Bereich der Strangbrennscheidmaschine (1) zwei schwenkbare Halterungen (2) aufweist, die mittels wenigstens einem an der Strangbrennscheidmaschine (1) angeordneten Druckluftzylinder (8) um einen senkrecht zur Längserstreckung einer Bramme (5) orientierten Drehpunkt (D) an der Strangbrennscheidmaschine (1) betätigbar sind, wobei an jeder Halterung (2) ein Anklemmhalter (3) mit einer Anklemmplatte (4) an deren vorderen freien Ende zur Anklemmung an die Bramme (5) starr angebracht und weiterhin an den Halterungen (2) die mit Kühlwasser durchströmte Hitzeschutzplatte (6) befestigt ist, und dass sich Armaturen (9,10) zum Freigeben der Medienwege und die Mediensteuerung (9) außerhalb der Strangbrennschneidmaschine (1) befinden, wobei die Anordnung der schwenkbaren Halterungen (2) zusammen mit den Anklemmhaltern (3) und den Anklemmplatten (4) und der mit Kühlwasser durchströmten Hitzeschutzplatte (6) so angeordnet sind, dass das Rückstellmoment (M1) zum Anheben des Anklemmhalters (3) mit der Anklemmplatte (4) in eine obere Stellung und damit das Lösen von der Bramme (5) nicht durch zusätzliche Gegen- oder Rückholgewichte, sondern durch die Anordnung der schwenkbaren Halterungen (2) zusammen mit den Anklemmhaltern (3) und der mit Kühlwasser durchströmten Hitzeschutzplatte (6) für die Brennschneidmaschinenkühlung, bezogen auf den Drehpunkt (D) größer ist, als das Moment (M1) aus dem Gewicht (F2) des Anklemmhalters (3) mit der Anklemmplatte (4) multipliziert mit dem Hebelarm (L2) und den auftretenden Reibungswiderständen.

2. Verfahren zur Steuerung einer Anklemmeinrichtung zum Anklemmen an Brammen (5) an einer Strangbrennscheidmaschine (1) gemäß dem Oberbegriff des Anspruches 1, **dadurch gekennzeichnet, dass** nach dem Freigeben der Medienwege durch Armaturen (9,10) das Rückstellmoment (M1) zum Anheben des Anklemmhalters (3) mit der Anklemmplatte (4) in die obere Stellung und damit das Lösen von der Bramme (5) nicht durch zusätzliche Gegen- oder Rückholgewichte, sondern durch die Anordnung der schwenkbaren Halterungen (2) zusammen mit den Anklemmhaltern (3) und der mit Kühlwasser durchströmten Hitzeschutzplatte (6) für die Brennschneidmaschinenkühlung, bezogen auf den Drehpunkt (D) größer ist, als das Moment (M1) aus dem Gewicht (F2) des Anklemmhalters (3) mit der Anklemmplatte (4) multipliziert mit dem Hebelarm (L2) und den auftretenden Reibungswiderständen.

3. Verfahren nach Anspruch 3, **dadurch gekennzeichnet, dass** das Freigeben der Medienwege durch die Armaturen (9,10) manuell und/oder elektrisch erfolgt.

## Claims

1. A flame cutting machine (1) fitted with a cutting torch (S) and a clamping device for clamping on slabs (5)fitted with a swivelling bracket (2) for clamping on slabs (5) and a thermal protection plate (6), **characterised in that** the clamping device includes two swivelling brackets in the rear section of the flame cutting machine (1), which can be operated by means of at least one compressed air cylinder (8) arranged on the flame cutting machine (1) around a fulcrum (D) on the flame cutting machine (1), which fulcrum is oriented vertically to the longitudinal span of a slab (5), whereas a on clamping bracket (3) having a clamping plate (4) at its front free is rigidly mounted at each bracket (2) for clamping the slabs (5) and the thermal protection plate (6) through which flows a cooling water, is moreover fastened to the brackets (2), and that fittings (9, 10) for releasing the media paths and that the media control system (9) are situated outside the flame cutting machine (1), whereas the swivelling brackets (2) along with the clamping bracket (3) and the clamping plates (4), and the thermal protection plate (6) through which flows cooling water, are arranged in such a way that the self-aligning torque (M1), for raising the clamping bracket (3) with the clamping plate (4) into an upper position and hence releasing the slabs (5), not through additional counterweights or catch-up weights, but through the arrangement of the swivelling brackets (2) together with the clamping brackets (3) and with the thermal protection plate (6) through which flows cooling water, for the flame cutting machine, relative to the fulcrum (D), is greater than the torque (M1) consisting of the weight (F2) of the clamping bracket (3) with the clamping plate (4) multiplied with the lever arm (L2) and the friction resistances induced.

2. A method of controlling a clamping device for clamping slabs (5) on a flame cutting machine (1) according to the preamble of claim 1, **characterised in that** after releasing the media paths through fittings (9,10) the self-aligning torque (M1), for raising the clamping bracket (3) with the clamping plate (4) into the upper position and hence releasing the slabs (5), not through additional counterweights or catch-up weights, but through the arrangement of the swivelling brackets (2) together with the clamping brackets (3) and with the thermal protection plate (6) through which flows cooling water, for the flame cutting machine, relative to the fulcrum (D), is greater than the torque (M1) consisting of the weight (F2) of the clamping bracket (3) with the clamping plate (4) multiplied with the lever arm (L2) and the friction resistances induced.

3. The method of claim 2, **characterised in that** releasing the media paths through fittings (9, 10) is a manual and/or electric operation.

## Revendications

1. Machine de coupage à la flamme (1) disposant d'une torche de coupage (S) et d'un dispositif de serrage pour serrer des brames (5), avec un support pivotant (2) pour serrer des brames (5) et une plaque de protection thermique (6) parcourue d'eau de refroidissement, **caractérisée en ce que** le dispositif de serrage dans la partie arrière de la machine de coupage à la flamme (1) présente deux supports pivotants (2), pouvant être sollicités à l'aide d'au moins un cylindre à air comprimé (8) disposé au niveau de la machine de coupage à la flamme (1), autour d'un point de rotation (D) orienté perpendiculaire à l'étendue longitudinale d'une brame (5), sur la machine de coupage à la flamme (1), dans laquelle un support de serrage (3) avec une plaque de serrage (4) aux extrémités libres avant de celle-ci est fixé à demeure pour serrer la brame (5) à chaque support (2) et la plaque de protection thermique (6) parcourue d'eau de refroidissement est en outre fixée au niveau des supports (2), et que des fixations (9, 10) permettant de libérer les passages de fluide se trouvent à l'extérieur de la machine de coupage à la flamme, dans laquelle les supports pivotants (2) avec les supports de serrages (3) et les plaque de serrage (4) de même que la plaque de protection thermique (6) parcourue d'eau de refroidissement sont disposés de telle sorte, que le moment de rappel (M1) permettant de relever le support de serrage (3) avec la plaque de serrage (4) pour atteindre une position supérieure et donc de desserrer la brame (5), non pas grâce à des contrepoids ou poids de rattrapage supplémentaires, mais par la configuration des supports pivotants (2) en même temps que les support de serrage (3) et la plaque de protection thermique (6) parcourue d'eau de refroidissement pour le refroidissement de la machine de coupage à la flamme, rapporté au point de rotation (D) est supérieur au couple (M1) résultant du poids (F2) du support de serrage (3) avec la plaque de serrage (4) multiplié par le bras de levier (L2) et des résistances de friction apparaissant.

2. Procédé de commande d'un dispositif de serrage pour serrer des brames (5) au niveau d'une machine de coupage à la flamme (1) conformément au préambule de la revendication 1, **caractérisé en ce qu'**après la libération des passages de fluide à l'aide des fixations (9, 10), le moment de rappel (M1) permettant de relever le support de serrage (3) avec la plaque de serrage (4) pour atteindre une position supérieure et donc de desserrer la brame (5), non pas grâce à des contrepoids ou poids de rattrapage supplémentaires, mais par la configuration des supports pivotants (2) en même temps que les support de serrage (3) et la plaque de protection thermique (6) parcourue d'eau de refroidissement pour le refroidissement de la machine de coupage à la flamme, rapporté au point de rotation (D) est supérieur au couple (M1) résultant du poids (F2) du support de serrage (3) avec la plaque de serrage (4) multiplié par le bras de levier (L2) et des résistances de friction apparaissant alors.

3. Procédé selon la revendication 2, **caractérisé en ce que** la libération des passages de fluide à l'aide des fixations (9, 10) s'effectue manuellement et/ou électriquement.
